(19) Europäisches Patentamt
European Patent Office
Office européen des brevets

(11) **EP 3 588 235 B1**

(12) **EUROPEAN PATENT SPECIFICATION**

(45) Date of publication and mention
of the grant of the patent:
**23.03.2022 Bulletin 2022/12**

(21) Application number: **18250022.3**

(22) Date of filing: **27.09.2018**

(51) International Patent Classification (IPC):
**G05D 23/19** (2006.01) **F24D 19/10** (2006.01)

(52) Cooperative Patent Classification (CPC):
**G05D 23/1919; F24D 19/10;** F24D 2220/0257

(54) **ELECTRONIC THERMOSTATIC RADIATOR VALVE**

ELEKTRONISCHER HEIZKÖRPERTHERMOSTAT

THERMOSTAT DE RADIATEUR ELECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.06.2018 GB 201810613**

(43) Date of publication of application:
**01.01.2020 Bulletin 2020/01**

(73) Proprietor: **Schneider Electric Controls UK Limited**
**Telford TF3 3BL, Shropshire (GB)**

(72) Inventors:
• **WATTERS, Anthony**
**Plymouth, Devon, PL2 1JB (GB)**
• **WILSON, Clive**
**Plymouth, Devon, PL3 5HY (GB)**

(74) Representative: **Badger, John Raymond**
**J.R. Badger & Co.**
**6 Simpson Road**
**Wylde Green**
**Sutton Coldfield**
**West Midlands B72 1EP (GB)**

(56) References cited:
**DE-A1-102012 011 336 GB-A- 2 472 084**
**US-A1- 2004 256 473**

## Description

The present invention relates a radiator thermostat and to an electronic thermostatic radiator valve for a radiant heating system for heating one or more zones in a building.

Radiant heating systems typically include a central heater that is thermally coupled to radiators positioned in different zones of a building. In a conventional radiant heating system the radiators are positioned in different rooms in a residential structure and are operatively coupled to a central boiler. Hot water from the boiler is fed to the radiators to radiantly heat the respective rooms. In a zoned radiant heating system each radiator is operatively connected to a respective thermostatic valve that opens and closes to control the flow of hot water into the radiator based on the environmental temperature in the respective zones. Traditional thermostatic valves comprise wax motors that open and close due to thermal expansion or a wax material driven by changes in environment temperature. No other power source is required to open and close such valves.

However traditional wax driven type valves do not usually control the heat output of the radiator as efficiently as desired. Thus, for example, due to the time delay of response of wax material to apparent changes of room temperature the radiator is liable to refrain from providing heat at times when heat is required to maintain a pre-selected, target room temperature, or the radiator continues to provide heat when parts of a room, but not the wax material have attained the pre-selected temperature.

Other proposals for controlling the temperature of an environment are described in DE10 2012011336A1, US2004/256473A1 and GB 2472084A.

A further feature of a thermostatic radiator valve attached to a radiator is that the response of the valve to temperature changes of the room environment is disadvantageously affected by the heat that is radiated directly from the radiator onto the valve. That affects the operation of both traditional wax type radiator valves and also electronic type thermostatic radiator valves. In consequence, in common with the time delay of wax thermostats, the flow of water to a radiator controlled by an electronic type valve and thus heat output does not accurately correspond with that required to maintain a pre-selected room temperature.

The present invention seeks to provide an improved radiator thermostat and an improved thermostatic radiator valve which mitigates or overcomes at least some of the disadvantages of hitherto known radiator thermostats and thermostatic radiator valves.

An electronic type radiator thermostat may employ a stepper motor which, typically via gearing, operates a drive unit that then engages with a valve positioner and valve member that are an integral part of a fluid flow path. Whilst a thermostat of that type may have some advantages, it does have certain limitations of performance and which beneficially might also be addressed. Those limitations and preferable features include:

1. Valve Non-Linearity. The relationship between the flow of heated water and the number of turns (motor steps) by which the valve is open is non-linear and contains dead-spots at the start and end of operating range.

2. Battery Life - The battery life budget is estimated at 1000 steps per day of movement. This means that a drive unit controller needs to avoid swings in output and all unnecessary movement.

3. Motor Slip. The motor, when driven at the acoustically acceptable speed, would not always move by the number of steps requested by a drive unit controller. This is called "slip". This would mean that the actual position of the valve mechanically would differ from the position as expected by the software.

4. System Lag - A heating system inherently contains a long lag time between the output change and effect. i.e. the effect of opening a valve to increase temperature often will only be seen around 15 minutes later. So a prediction is required of what the temperature will be in the future so to apply the control stimulus in time in order to avoid oscillation.

5. Asymmetric system. In attempting room temperature control typically there is means only to heat the room. There is no means to cool the room. Thus it is possible only to apply an increase to room temperature and not a decrease. Bearing in mind that rooms with balanced radiators and insulation heat quicker than they cool, there is an asymmetric system.

6. Generality - The system should work effectively in a range of thermal conditions and room/radiator sizes.

7. System Response - Desirably to ensure fast rise time (high gain), minimal overshoot, with a high immunity to noise giving steady state stability (low gain).

In accordance with one aspect of the present disclosure there is provided a radiator thermostat comprising a source of electrical power and a drive unit powered by the source of electrical power, the drive unit being operatively connectable to a valve positioner adapted for control of a valve member whereby, in use, the drive unit determines a position of the valve member and thus flow of fluid through a fluid path, the thermostat further comprises a drive unit controller which is responsive to a temperature of an environment and which is adapted to control the drive unit and thus, in use, the position of said valve member as a function of a rate of change of that temperature, wherein said drive unit controller comprises a proportional integral derivative (PID) controller for control of the drive unit.

In accordance with another aspect of the present disclosure there is provided

an electronic type thermostatic radiator valve comprising a fluid inlet, a fluid outlet and a fluid path between said inlet and outlet, said fluid path comprising a valve member to control the flow of fluid through the fluid path, the valve member being operatively connected to a valve positioner, the valve further comprising a thermostat comprising a source of electrical power and a drive unit powered by the source of electrical power, the drive unit being operatively connected to the valve positioner whereby the drive unit determines the position of the valve member and thus flow of fluid through the fluid path, the valve further comprises a drive unit controller which is responsive to a temperature of an environment and which is adapted to control the drive unit and thus the position of the valve member as a function of a rate of change of that temperature, wherein said drive unit controller comprises a proportional integral derivative (PID) controller for control of the drive unit.

The invention provides also a radiant heating system comprising an electronic thermostatic radiator valve of the invention and a device for setting a target room temperature, wherein the device for setting the target room temperature is remote from the drive unit controller and wherein the drive unit controller communicates wirelessly with the remote device.

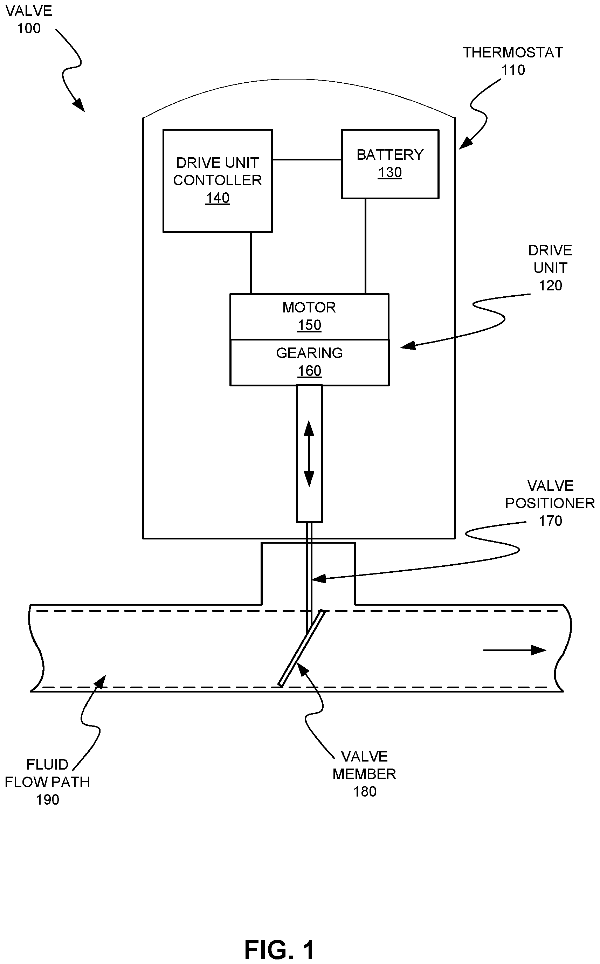

A thermostatic radiator valve assembly 100 and radiator thermostat 110 of the present invention are shown schematically in Figure 1 of the accompanying drawings valve.

The thermostat 110 may comprise a drive unit controller 140 which is adapted to control the drive unit 120, 150, 160 as a function of one or more parameters additional to that of rate of change of temperature. The drive unit controller may be of a type which communicates wirelessly with a remote device that is operable to set a target room temperature.

Other parameters and features which may be employed and be provided by the drive unit controller for control of the drive unit 120 include:

> **Linear Adapted Gain** The dynamic range of the valve is found typically to be between only 250 and 500 steps in movement of the valve member in the fluid flow path. At fewer than 250 steps open there is no flow and above 500 steps there is no more incremental flow. However the 250 steps of control band are not linear. A 10 step movement between 250 and 260 results in far more flow than between 490 and 500. Empirical measurements showed low demand gain to be 50X the high demand gain. To this end, the invention teaches that an attempt is made to compensate gain based on the current valve position via use of a look up table. Thus for a drive unit 120 which is operable to move a valve positioner 170 in a stepwise manner between open and closed positions of a valve member, movement of the valve positioner may be a function of said rate of change of the temperature and a function of the position from which the valve positioner is to be moved in response to said rate of change of temperature.

> **Schedule Adapted Gain** Because a system behaviour is desired that provides a fast rise time and yet stable steady state a schedule adapted gain may be provided. This may allow larger movements of the valve following a disturbance but wind this back as the system closes in on control. The control is measured as a time period (t) following a crossing of target temp and actual temp. There are two gains (gainDisturbance / gainSteadyState) which may switched between and the error is further multiplied by this value.

Thus the drive unit 120 may be adapted to move a valve positioner to a first open position following a request to increase the temperature of an environment to a target temperature and then move the valve positioner to a second position which reduces flow rate through the fluid path 190 as the temperature approaches the target temperature.

> **Set Point Change.** If a setpoint change is detected the radiator valve unit controller 140 may allow a one-off offset to the current position to be performed, e.g. if Setpoint is increased causing a, say, two degree error, the valve will open a fixed amount based on this change. This improves the responsiveness of the controller to significant step change inputs.

> **Max / Minimum Battery Life Protection.** If the controller determines that the room is heating as quickly as what can reasonably expected, it may ensure that no further valve opening is allowed. Conversely if the controller determines that the room is cooling as fast as can reasonably be expected, it may ensure that no further valve closure is allowed.

The drive unit controller 140 comprises a proportional integral derivative controller for PID relative control of the drive unit 120. It may comprise a microprocessor receiving measured (or estimated) room temperature, target temperature and radiator flow temperature and using these as inputs to a predictive PID control algorithm. As the control algorithm is based on PID control, the output would be relative rather than absolute. Error is calculated as (Set point - Current Temp) - Projected Error. The size of the movement of the valve may be proportional to the error. The projected error may be calculated as current rate of change extrapolated over a period of N minutes (for example 30 minutes). This has the effect of when heating to a setpoint, the valve member will start closing before the setpoint is reached. Conversely when cooling to a setpoint the controller will start operating the drive unit to open the valve member before the setpoint is reached. The algorithm typically may be executed every 5 minutes.

A typical PID takes the form of

$$u(t) = K_{\mathrm{p}} e(t) + K_{\mathrm{i}} \int_0^t e(t)\,dt + K_{\mathrm{d}} \frac{de(t)}{dt},$$

However due to the system lag between input and effect this was found to be inadequate because to avoid overshoot a significant D coefficient was required which had a deleterious effect on rise time and was sensitive to noise. The novel and inventive step was to change the e(t) component to be a predictive element based on what the algorithm "predicts" the error would be in the future - for example in 30 minutes time based on the current rate of change. This brought the error and response into phase.

However using a high pass filter on the input would introduce sensitivity to noise. To reduce the effect of noise on the measured signal an Exponentially Weighted Moving Average or "fading memory" room temperature input filter to the algorithm may be adopted.

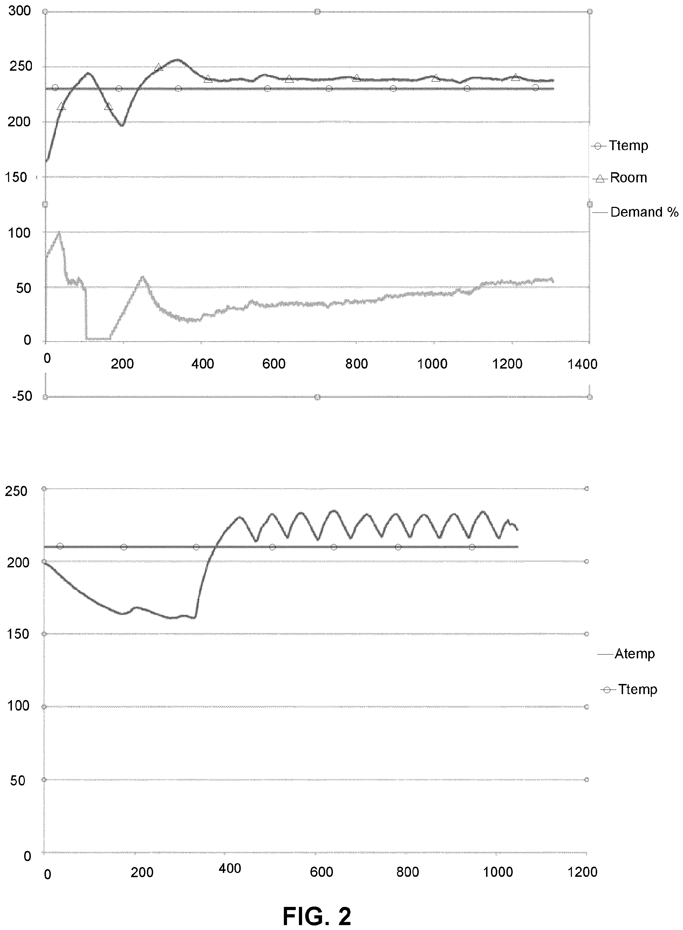

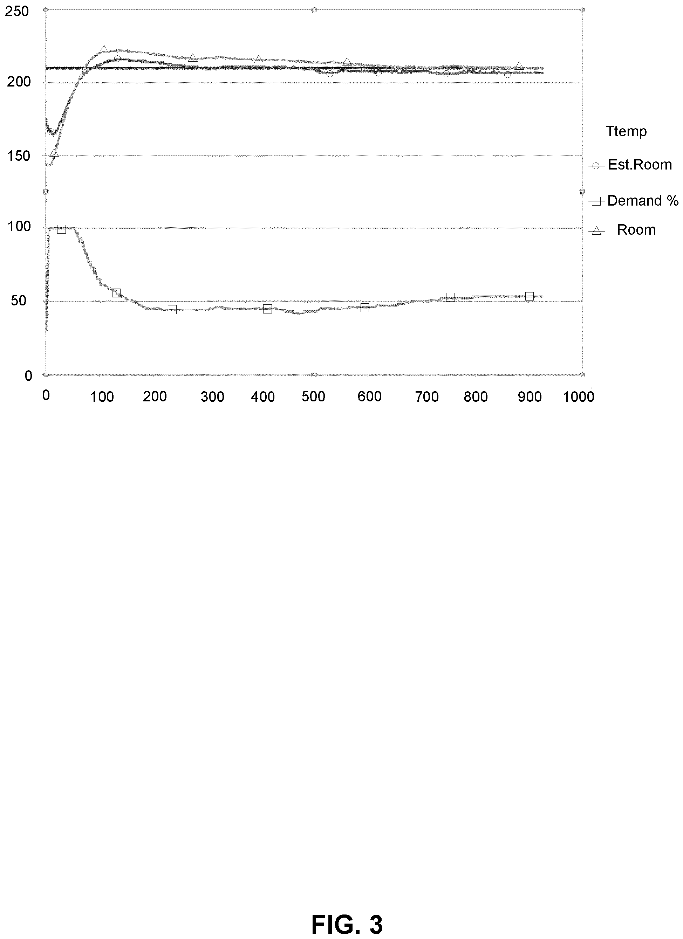

By employing the present invention the long established problem of temperature overshoot and also of delayed start can be significantly mitigated as shown by the graphs of the accompanying Figures 2 and 3. Figure 2 shows the temperature v time plots for two typical known thermostats. In contrast Figure 3 shows the plot for the temperature of a room wherein the radiator valve is controlled by a thermostat 110 having a drive unit 120 controlled by features in accordance with the invention as above described.

The present invention accordingly facilitates the provision of a radiator thermostat having an accuracy compliant with the requirements of the standard EN15500 and of eu.bacA+criteria.

**Claims**

1. A radiator thermostat (110) comprising a source (130) of electrical power and a drive unit (120) powered by the source of electrical power, the drive unit being operatively connectable to a valve positioner (170) adapted for control of a valve member (180) whereby, in use, the drive unit (120) determines a position of the valve member and thus flow of fluid through a fluid path (190), the thermostat further comprises a drive unit controller (140) which is responsive to a temperature of an environment and which is adapted to control the drive unit and thus, in use, the position of said valve member (180) as a function of a rate of change of that temperature, whereby said drive unit controller (140) comprises a proportional integral derivative (PID) controller for control of the drive unit (120), **characterised in that** the PID controller comprises a microprocessor configured to receive measured or estimated room temperature, target temperature and radiator flow temperature and uses these as inputs to a predictive PID control algorithm, whereby an error is calculated as set point minus current temp minus projected error, whereby the size of the movement of the valve may be proportional to the error and whereby the projected error may be calculated as current rate of change extrapolated over a period of N minutes.

2. A radiator thermostat according to claim 1 wherein the drive unit controller (140) is adapted to communicate wirelessly with a remote device which is operable to set a target temperature.

3. A radiator thermostat according to claim 1 or claim 2 wherein the drive unit controller (140) is adapted to control the drive unit (120) as a function of one or more parameters additional to that of rate of change of temperature.

4. A radiator thermostat according to claim 3 wherein the drive unit (120) exhibits linear adaptive gain whereby the drive unit (120) is operable to move a valve positioner (170) in a stepwise manner between open and closed positions of the valve member (180) and wherein movement of the valve positioner is a function of said rate of change of the temperature and a function of a position from which the valve positioner is to be moved in response to said rate of change of temperature.

5. A radiator thermostat according to claim 3 or claim 4 wherein the drive unit (120) is adapted to move the valve positioner (170) to a first open position following a request to increase the temperature of the environment to a target temperature and then move the valve positioner to a second position which reduces flow rate through the fluid path (190) as the temperature approaches the target temperature.

6. A radiator thermostat according to any one of claims 3 to 5 wherein the drive unit controller (140) comprises means for determining the rate at which the environment is increasing in temperature and operates to inhibit further opening of the valve member (180) if the rate of increase of temperature is greater than a predetermined value.

7. A radiator thermostat according to any one of the preceding claims wherein the proportional integral derivative controller for control of the drive unit (120) incorporates an exponentially weighted moving average room temperature input filter.

8. An electronic thermostatic radiator valve (100) comprising a radiator thermostat (110) according to any one of the preceding claims in combination with the valve member (180) and wherein the drive unit (120) of the radiator thermostat is operatively connected to the valve positioner (170) for control of a fluid path valve member (180).

**9.** A radiant heating system comprising an electronic thermostatic radiator valve (100) according to claim 8 and a device for setting a target room temperature, wherein the device for setting the target room temperature is remote from the drive unit controller (140) and wherein the drive unit controller communicates wirelessly with the remote device.

**Patentansprüche**

**1.** Heizkörperthermostat (110), umfassend eine Quelle (130) elektrischen Stroms und eine Antriebseinheit (120), die von der Quelle elektrischen Stroms gespeist wird, wobei die Antriebseinheit funktionsfähig mit einem Ventilsteller (170) verbunden sein kann, der zur Steuerung eines Ventilelements (180) angepasst ist, wodurch die Antriebseinheit (120) in Verwendung eine Position des Ventilelements und somit einen Fluidstrom durch einen Fluidpfad (190) bestimmt, wobei der Thermostat ferner eine Antriebseinheitsteuerung (140) umfasst, die auf eine Umgebungstemperatur reagiert und die angepasst ist, um die Antriebseinheit und somit in Verwendung die Position des Ventilelements (180) abhängig von einer Änderungsrate dieser Temperatur zu steuern, wodurch die Antriebseinheitssteuerung (140) eine Proportional-Integral-Differential(PID)-Steuerung zur Steuerung der Antriebseinheit (120) umfasst, **dadurch gekennzeichnet, dass** die PID-Steuerung einen Mikroprozessor umfasst, der konfiguriert ist, um eine gemessene oder geschätzte Raumtemperatur, Vorgabetemperatur und Heizkörper-Durchflusstemperatur zu erhalten und diese als Eingaben für einen prädiktiven PID-Steuerungsalgorithmus zu verwenden, wobei ein Fehler als Sollwert minus aktuelle Temperatur minus prognostizierter Fehler berechnet wird, wobei die Größe der Bewegung des Ventils proportional zu dem Fehler sein kann und wodurch der prognostizierte Fehler als aktuelle Änderungsrate extrapoliert über einen Zeitraum von N Minuten berechnet werden kann.

**2.** Heizkörperthermostat nach Anspruch 1, wobei die Antriebseinheitsteuerung (140) angepasst ist, um drahtlos mit einer entfernten Vorrichtung zu kommunizieren, die funktionsfähig ist, um eine Solltemperatur einzustellen.

**3.** Heizkörperthermostat nach Anspruch 1 oder Anspruch 2, wobei die Antriebseinheitsteuerung (140) angepasst ist, um die Antriebseinheit (120) abhängig von einem oder mehreren Parametern zusätzlich zu der der Änderungsrate der Temperatur zu steuern.

**4.** Heizkörperthermostat nach Anspruch 3, wobei die Antriebseinheit (120) eine lineare adaptive Verstärkung aufweist, wodurch die Antriebseinheit (120) funktionsfähig ist, um einen Ventilsteller (170) schrittweise zwischen offenen und geschlossenen Positionen des Ventilelements (180) zu bewegen, und wobei eine Bewegung des Ventilstellers abhängig von der Änderungsrate der Temperatur und abhängig von einer Position ist, von der der Ventilsteller als Reaktion auf die Änderungsrate der Temperatur bewegt werden soll.

**5.** Heizkörperthermostat nach Anspruch 3 oder Anspruch 4, wobei die Antriebseinheit (120) so angepasst ist, um den Ventilsteller (170) nach einer Aufforderung, die Temperatur der Umgebung auf eine Vorgabetemperatur zu erhöhen, in eine erste offene Position zu bewegen und dann den Ventilsteller in eine zweite Position zu bewegen, die die Durchflussrate durch den Fluidpfad (190) verringert, wenn sich die Temperatur der Vorgabetemperatur annähert.

**6.** Heizkörperthermostat nach einem der Ansprüche 3 bis 5, wobei die Antriebseinheitsteuerung (140) Einrichtungen zum Bestimmen der Rate umfasst, mit der die Temperatur in der Umgebung ansteigt, und betrieben wird, um ein weiteres Öffnen des Ventilelements (180) zu verhindern, wenn die Rate des Temperaturanstiegs größer als ein vorbestimmter Wert ist.

**7.** Heizkörperthermostat nach einem der vorherigen Ansprüche, wobei die Proportional-Integral-Differential-Steuerung zum Steuern der Antriebseinheit (120) einen exponentiell gewichteten gleitenden Raumdurchschnittstemperatur-Eingangsfilter integriert.

**8.** Elektronisches thermostatisches Heizkörperventil (100), umfassend einen Heizkörperthermostat (110) nach einem der vorherigen Ansprüche in Kombination mit dem Ventilelement (180) und wobei die Antriebseinheit (120) des Heizkörperthermostats funktionsfähig mit dem Ventilsteller (170) verbunden ist, um ein Fluidpfad-Ventilelement (180) zu steuern.

**9.** Strahlungsheizungssystem, umfassend ein elektronisches thermostatisches Heizkörperventil (100) nach Anspruch 8 und eine Vorrichtung zum Einstellen einer Raumvorgabetemperatur, wobei die Vorrichtung zum Einstellen der Raumvorgabetemperatur von der Antriebseinheitsteuerung (140) entfernt ist und wobei die Antriebseinheitsteuerung drahtlos mit der entfernten Vorrichtung kommuniziert.

**Revendications**

**1.** Thermostat de radiateur (110) comprenant une source (130) de puissance électrique et une unité d'entraînement (120) alimentée par la source de puissance électrique, l'unité d'entraînement pouvant être raccordée fonctionnellement à un positionneur de vanne (170) adapté pour commander un élément vanne (180) moyennant quoi, lors de l'utilisation, l'unité d'entraînement (120) détermine une position de l'élément vanne et donc un écoulement de fluide à travers un chemin de fluide (190), le thermostat comprend en outre un dispositif de commande (140) d'unité d'entraînement qui est sensible à un température d'un environnement et qui est adapté pour commander l'unité d'entraînement et donc, lors de l'utilisation, la position dudit élément vanne (180) en fonction d'un taux de changement de cette température, moyennant quoi

ledit dispositif de commande (140) d'unité d'entraînement comprend un dispositif de commande proportionnel intégral dérivé (PID) pour commander l'unité d'entraînement (120), **caractérisé en ce que** le dispositif de commande PID comprend un microprocesseur configuré pour recevoir la température ambiante mesurée ou estimée, la température cible et la température d'écoulement de radiateur et les utilise en tant qu'entrées d'un algorithme de commande PID prédictif, moyennant quoi une erreur est calculée sous la forme d'un point de consigne moins la température actuelle moins l'erreur projetée, moyennant quoi la taille du déplacement de la vanne peut être proportionnelle à l'erreur et moyennant quoi l'erreur projetée peut être calculée sous la forme d'un taux de changement actuel extrapolé sur une période de N minutes.

2. Thermostat de radiateur selon la revendication 1, ledit dispositif de commande (140) d'unité d'entraînement étant adapté pour communiquer sans fil avec un dispositif à distance qui sert à régler une température cible.

3. Thermostat de radiateur selon la revendication 1 ou la revendication 2, ledit dispositif de commande (140) d'unité d'entraînement étant adapté pour commander l'unité d'entraînement (120) en fonction d'un ou plusieurs paramètres supplémentaires à celui du taux de changement de température.

4. Thermostat de radiateur selon la revendication 3, ladite unité d'entraînement (120) présentant un gain adaptatif linéaire moyennant quoi l'unité d'entraînement (120) sert à déplacer un positionneur de vanne (170) d'une manière progressive entre les positions ouverte et fermée de l'élément vanne (180) et moyennant quoi le mouvement du positionneur de vanne est une fonction dudit taux de changement de la température et une fonction d'une position à partir de laquelle le positionneur de vanne doit être déplacé en réponse audit taux de changement de température.

5. Thermostat de radiateur selon la revendication 3 ou la revendication 4, ladite unité d'entraînement (120) étant adaptée pour déplacer le positionneur de vanne (170) vers une première position ouverte suite à une demande d'augmentation de la température de l'environnement jusqu'à une température cible et ensuite déplacer le positionneur de vanne vers une seconde position qui réduit le débit à travers le chemin de fluide (190) lorsque la température se rapproche de la température cible.

6. Thermostat de radiateur selon l'une quelconque des revendications 3 à 5, ledit dispositif de commande (140) d'unité d'entraînement comprenant un moyen pour déterminer le taux auquel l'environnement augmente en température et fonctionnant pour empêcher une ouverture supplémentaire de l'élément vanne (180) si le taux d'augmentation de température est supérieure à une valeur prédéfinie.

7. Thermostat de radiateur selon l'une quelconque des revendications précédentes, ledit dispositif de commande proportionnel intégral dérivé pour commander l'unité d'entraînement (120) incorporant un filtre d'entrée de température ambiante moyenne mobile à pondération exponentielle.

8. Vanne de radiateur thermostatique électronique (100) comprenant un thermostat de radiateur (110) selon l'une quelconque des revendications précédentes en combinaison avec l'élément vanne (180) et ladite unité d'entraînement (120) du thermostat de radiateur étant fonctionnellement raccordée au positionneur de vanne (170) pour commander un élément vanne de chemin de fluide (180).

9. Système de chauffage par rayonnement comprenant une vanne de radiateur thermostatique électronique (100) selon la revendication 8 et un dispositif destiné à régler une température ambiante cible, ledit dispositif destiné à régler la température ambiante cible étant éloigné du dispositif de commande (140) d'unité d'entraînement et ledit dispositif de commande d'unité d'entraînement communiquant sans fil avec le dispositif à distance.

VALVE
100

THERMOSTAT
110

DRIVE UNIT
CONTOLLER
140

BATTERY
130

DRIVE
UNIT
120

MOTOR
150

GEARING
160

VALVE
POSITIONER
170

FLUID
FLOW PATH
190

VALVE
MEMBER
180

**FIG. 1**

**FIG. 2**

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102012011336 A1
- US 2004256473 A1

- GB 2472084 A